# EUROPÄISCHE PATENTSCHRIFT

(11) **EP 2 927 041 B1**
(45) Veröffentlichungstag und Bekanntmachung des Hinweises auf die Patenterteilung: **01.11.2017**
(21) Anmeldenummer: 15158811.8
(22) Anmeldetag: 12.03.2015
(51) Int. Cl.: B60K 23/02, B60K 26/02, G05G 1/30, G05G 1/44

(54) **ANORDNUNG EINER HYDRAULISCHEN BETÄTIGUNGSEINRICHTUNG**
ASSEMBLY FOR A HYDRAULIC ACTUATING DEVICE
SYSTÈME D'UN DISPOSITIF D'ACTIONNEMENT HYDRAULIQUE

(30) Priorität: 31.03.2014 DE 102014206003
(43) Veröffentlichungstag der Anmeldung: 07.10.2015
(73) Patentinhaber: Schaeffler Technologies AG & Co. KG, 91074 Herzogenaurach (DE)
(72) Erfinder: Honselmann, Sebastian, 77886 Lauf (DE); Billmann, Franck, 67250 Hunspach (FR)

(56) Entgegenhaltungen:
- EP-A1- 1 070 867
- EP-A1- 1 659 017
- EP-A2- 2 778 459
- DE-A1- 10 232 212
- DE-A1-102011 111 087
- DE-A1-102013 204 185
- DE-U1- 20 220 483

## Beschreibung

Die Erfindung betrifft eine Anordnung einer hydraulischen Betätigungseinrichtung, insbesondere für Kupplungs- oder Bremssysteme von Kraftfahrzeugen, mit einem an einem Pedalbock verschwenkbar um eine Drehachse gelagerten Pedalhebel, welcher zur Erzeugung eines hydraulischen Betätigungsdrucks mit einem Geberzylinder wirkverbunden ist, wobei ein in der Art einer Übertotpunktfeder ausgebildeter Energiespeicher und eine mit dem Geberzylinder gekoppelte hydraulische Stellvorrichtung vorgesehen sind.

Bekanntermaßen wird bei einer hydraulischen Betätigungseinrichtung, beispielsweise einer Fahrzeugkupplung in einem Kraftfahrzeug, die Kupplung mittels eines hydraulischen Nehmerzylinders betätigt, der über eine Druckleitung mit einem Geberzylinder verbunden ist. Ein Kolben des Geberzylinders steht wiederum über eine Schub- oder Kolbenstange mit einem Pedalhebel in Verbindung, wodurch bei Betätigung des üblicherweise um eine an einem Pedalbock angeordnete Drehachse verschwenkbaren Pedalhebels eine Beaufschlagung des Geberzylinders erfolgt. Bei diesen Systemen hängt die Pedalkraft zur Betätigung des Fußpedals von der Kupplungskennlinie ab, wobei über den Betätigungsweg unterschiedliche Pedalkräfte auftreten. Die Kupplungskennlinie und damit auch die Kennlinie der Pedalkraft über den Betätigungsweg können sich z. B. durch Verschleiß der Kupplung ändern.

Um einen möglichst gleichmäßigen Verlauf der Betätigungskraft über den Pedalweg zu erreichen bzw. beim Betätigen der Kupplung die vom Fahrer auf den Pedalhebel aufzubringende Betätigungskraft zu vermindern, sind aus dem Stand der Technik unterschiedliche Lösungen bekannt. So wird häufig eine so genannte Übertotpunktfeder eingesetzt, die das unbetätigte Pedal in seiner Ruhestellung hält und die bei einer Bewegung des Pedals zwischen der Ruhestellung und der Endstellung zunächst geringfügig vorgespannt ist und nach dem Überwinden eines Totpunktes die weitere Bewegung des Pedals unterstützt. Insbesondere kann damit die Pedalkraft nach Überwinden des Totpunktes und zum Ende des Pedalweges spürbar verringert werden.

Diese bekannten Übertotpunktfedereinrichtungen zum Anpassen der Betätigungskraft können zwar den Kraftverlauf anpassen. Kraftstreuungen, die beispielsweise durch Toleranzen der Bauteile entstehen, können sie jedoch nicht ausgleichen.

In einer noch nicht veröffentlichten technischen Lösung der Anmelderin wird ein Energiespeicher, wie eine Übertotpunktfedereinrichtung, eingesetzt, der mit einem Anbindungspunkt an einem um eine Drehachse an einem Pedalbock schwenkbeweglich gelagerten Pedalhebel angelenkt ist und mit einem zweiten Anbindungspunkt mit einer mit dem Geberzylinder gekoppelten hydraulischen Stellvorrichtung in Wirkverbindung steht. Mittels der bei einer Überschreitung eines vorbestimmten Wertes der auf den Pedalhebel aufgebrachten Betätigungskraft und damit einer Überschreitung eines vorbestimmten Wertes des im hydraulischen System vorhandenen Drucks ist eine selbsttätige Nachstellung des Energiespeichers/der Übertotpunktfeder und damit eine Anpassung der Betätigungskraft realisierbar. Diese Betätigungseinrichtung kann auch bei großen Abweichungen der Betätigungskraft, die beispielsweise durch Bauteiltoleranzen bedingt sind, selbsttätig einen Ausgleich der Kraftdifferenzen und ein Nachstellen der Betätigungskraft verwirklichen.

Allerdings besteht hierbei das Problem, dass die aktuellen Pedalböcke des Standes der Technik nicht für den Anbau einer derartig komplexen Einrichtung vorgesehen sind. Das kann nur mit einem relativ großen Platzbedarf bzw. mit Beeinträchtigungen anderer Funktionen geschehen. Üblicherweise dient der Pedalbock dazu, die Aufhängung des Pedalhebels zu ermöglichen sowie den Anschluss bzw. die Aufnahme des Geberzylinders und gegebenenfalls noch eines Unterstützungselementes zu übernehmen. Um den Kraftschluss (Befestigung) zum Fahrzeug herzustellen weist der Pedalbock außerdem entsprechende Verbindungspunkte für den Anbau an eine Spritzwand des Fahrzeugs auf. Es können auch noch Schnittstellen für Endschalter untergebracht sein. Bekannte Pedalböcke für hydraulische Betätigungseinrichtungen sind zwar so konstruiert, dass beispielsweise eine Übertotpunktfeder in das Pedalsystem eingebaut werden kann. Für den Einbau/die Integration komplexerer Vorrichtungen/Bauteile, wie beispielsweise einer Vorrichtung zur Adaption von Pedalkräften - unter anderem auch in Verbindung mit einem hydraulischen Geberzylinder - sind die bekannten Pedalböcke nicht geeignet.

Nachteilig bei der oben angeführten Betätigungseinrichtung ist zudem, dass durch unterschiedliche Betätigungsgeschwindigkeiten oder durch Volumendehnung der Druckleitung, welche die hydraulische Stellvorrichtung mit dem Geberzylinder verbindet, Druckspitzen entstehen können, die eine unerwünschte Nachstellung bewirken.

Das Dokument EP1070867A1 stellt den nächstliegenden Stand der Technik dar gemäß dem Oberbegriff des Anspruchs 1. Die Aufgabe der Erfindung besteht deshalb darin, eine Anordnung einer hydraulischen Betätigungseinrichtung, insbesondere für Kupplungs- oder Bremssysteme von Kraftfahrzeugen, mit einem an einem Pedalbock verschwenkbar um eine Drehachse gelagerten Pedalhebel, welcher zur Erzeugung eines hydraulischen Betätigungsdrucks mit einem Geberzylinder wirkverbunden ist, wobei ein in der Art einer Übertotpunktfeder ausgebildeter Energiespeicher und eine mit dem Geberzylinder gekoppelte hydraulische Stellvorrichtung vorgesehen sind, zu schaffen, die bei geringem Bauraumbedarf und ohne Beeinträchtigung anderer Funktionen der Betätigungseinrichtung/des Pedalbocks einen zuverlässigen Ausgleich von Kraftdifferenzen und ein Nachstellen der Pedalkraft verwirklicht. Außerdem soll verhindert werden, dass ein unerwünschtes Nachstellen, beispielsweise aufgrund von innerhalb der hydraulischen Verbindung auftretenden Druckspitzen, erfolgt.

Diese Aufgabe wird mit den Merkmalen des ersten Anspruchs gelöst. Vorteilhafte Ausgestaltungen ergeben sich aus den Unteransprüchen.

Die Stellvorrichtung und der Geberzylinder sind vorteilhafter Weise in den Pedalbock integriert und die hydraulische Stellvorrichtung insbesondere einerseits um einen an dem Pedalbock angeordneten Drehpunkt und andererseits um einen an dem Pedalhebel befindlichen Anbindungspunkt schwenkbar gelagert.

Vorzugsweise ist hierbei eine Kolbenstange der Stellvorrichtung um den Drehpunkt an dem Pedalbock schwenkbar gelagert. In dem Anbindungspunkt an dem Pedalhebel kann in einer vorteilhaften Ausführungsform der als Übertotpunktfeder ausgebildete Energiespeicher angelenkt sein.

Dabei sind der Geberzylinder und die Stellvorrichtung über eine in den Pedalbock integrierte Druckleitung miteinander gekoppelt, wobei in einer vorteilhaften Ausführungsform Mittel für eine Zu- oder Abschaltung der hydraulischen Verbindung zwischen dem Geberzylinder und der Stelleinrichtung vorgesehen sind, die in den Pedalbock integriert sind.

Vorzugsweise ist hierbei ein die hydraulische Verbindung zwischen dem Geberzylinder und der Stellvorrichtung sperrendes oder öffnendes Druckventil vorgesehen.

Eine vorteilhafte Ausführungsform sieht vor, dass die Druckleitung aus einem festen Kunststoff besteht. Die hydraulische Verbindung von Stellvorrichtung und Geberzylinder kann aber auch von einer flexiblen Druckleitung gebildet ist, die mittels Konnektoren/Anschlüsse am Geberzylinder befestigt ist.

Die Erfindung wird nachfolgend anhand eines Ausführungsbeispiels und zugehöriger Zeichnungen näher erläutert. Es zeigen:
Fig. 1 eine schematische Darstellung einer erfindungsgemäßen Anordnung einer hydraulischen Betätigungseinrichtung an einem Pedalbock in einer Vorderansicht,
Fig. 2 eine schematische Darstellung einer erfindungsgemäßen Anordnung einer hydraulischen Betätigungseinrichtung an einem Pedalbock in einer Seitenansicht,
Fig. 3 eine schematische Darstellung der erfindungsgemäßen Anordnung nach Fig. 1 mit nur einem Teil der Bauteile/Komponenten der Betätigungseinrichtung.

Bei der hier beschriebenen Anordnung einer hydraulischen Betätigungseinrichtung, beispielsweise für eine Kupplung eines Kraftfahrzeugs, wird in an sich bekannter Art und Weise bei Betätigen eines an einem Pedalbock 1 um eine Drehachse A schwenkbaren Pedalhebels 2 ein Geberzylinder 3 eines daran gekoppelten, nicht dargestellten, hydraulischen Ausrücksystems beaufschlagt. Durch die Verschiebung des Geberzylinderkolbens entsteht im Ausrücksystem ein zur Kupplungsbetätigung benötigter Druck, wodurch ein mit dem Geberzylinder 3 über eine Druckleitung verbundener hydraulischer Nehmerzylinder ein Aus- oder Einrücken der Kupplung bewirkt.

Ein hier nicht näher dargestellter Energiespeicher E ist in der Art einer Übertotpunktfedereinrichtung ausgebildet und zwischen dem Pedalbock 1 und dem Pedalhebel 2 derart angeordnet, dass er in Abhängigkeit von dem im Kupplungssystem vorherrschenden Druck eine unterschiedlich starke Vorspannung aufweist, um eine entsprechende Kompensation der Pedalkraft zu erzielen. Um diese Sensierfunktion erfüllen zu können, befindet sich der adaptive Energiespeicher E in Wirkverbindung mit dem Geberzylinder 3.

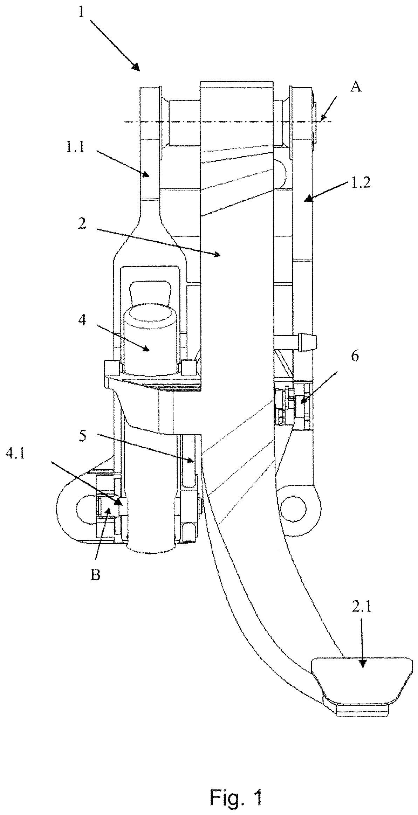

In Fig. 1 ist in schematischer Darstellung eine erfindungsgemäße Anordnung einer hydraulischen Betätigungseinrichtung mit einem Pedalbock 1 und einem um eine Drehachse A drehbaren Pedalhebel 2 in einer Vorderansicht dargestellt. Der Pedalhebel 2 ist hierbei zwischen zwei einander gegenüberliegenden Seitenwangen 1.1 und 1.2 des Pedalbocks 1 schwenkbar gelagert.

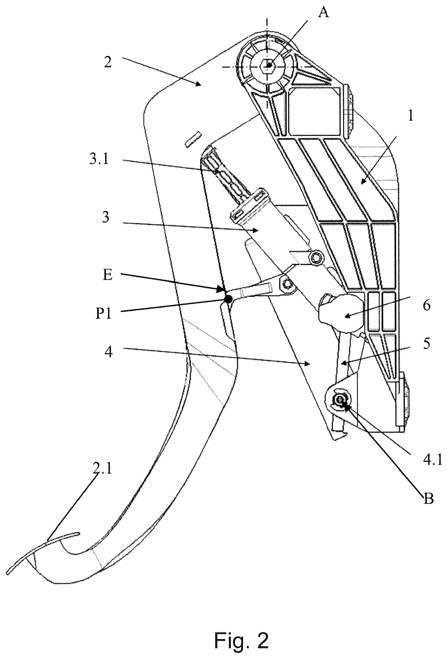

Beispielhaft ist hier eine Variante beschrieben, bei welcher der Energiespeicher E in der Art einer Übertotpunktfeder (nicht näher gezeigt) in eine hydraulische Stellvorrichtung 4 integriert und durch diese verstellbar ist. Die einen hydraulischen Stellzylinder (nicht näher dargestellt) und eine Kolbenstange 4.1 aufweisende Stellvorrichtung 4 ist wiederum in den Pedalbock 1 (hier in die Seitenwange 1.1) integriert und kann auf unterschiedliche Art und Weise (hier nicht näher dargestellt, da nicht erfindungsrelevant) mit dem ebenfalls in den Pedalbock 1 integrierten Geberzylinder 3 verbunden sein. Am Pedalbock 1 bzw. an der Seitenwange 1.1 befindet sich neben der Drehachse A für den Pedalhebel 2 auch ein Drehpunkt B für die Kolbenstange 4.1 der Stellvorrichtung 4. An dem der Kolbenstange 4.1 gegenüber liegenden Ende ist die Stellvorrichtung 4 über einen Anbindungspunkt P1 (in Fig. 2 angedeutet) an dem Pedalhebel 2 drehbar gelagert. Die Kopplung der hydraulischen Stellvorrichtung 4 mit dem Geberzylinder 3 erfolgt mittels einer Druckleitung 5, die vorzugsweise aus einem festen Kunststoff besteht und ebenfalls in den Pedalbock 1 integriert ist.

Allerdings können, beispielsweise durch unterschiedliche Betätigungsgeschwindigkeiten oder Volumendehnungen der Druckleitung 5, Druckspitzen entstehen, die zu einer unerwünschten Nachstellung führen. Um dies zu vermeiden, ist im Pedalbock 1 ein mit zwei definierten Positionen ausgestattetes Druckventil 6 integriert, welches die Druckleitung 5 zwischen dem Geberzylinder 3 und der Stellvorrichtung 4 je nach Wunsch und Bedarf entweder sperrt oder öffnet. Wenn die Druckleitung 5 und damit die hydraulische Verbindung zwischen dem Geberzylinder 3 und der Stellvorrichtung 4 durch das Druckventil 6 gesperrt ist, verhält sich die Stellvorrichtung 4 wie eine einfache Übertotpunktfeder.

In Fig. 2 ist eine Seitenansicht der erfindungsgemäßen Anordnung der hydraulischen Betätigungseinrichtung mit Pedalbock 1 und Pedalhebel 2 schematisch dargestellt.

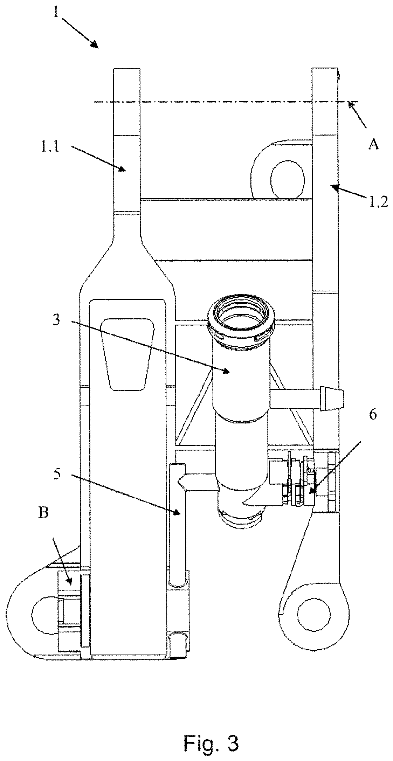

Die Fig. 3 zeigt die gleiche Ansicht wie Fig. 1, wobei hier aus Gründen einer besseren Übersicht der Pedalhebel 2 und die Stellvorrichtung 4 nicht dargestellt sind.

Es sei noch angefügt, dass die weiter oben beschriebene Konstruktion des Pedalbocks 1 nicht die einzige Option für eine erfindungsgemäße Anordnung darstellt.
Eine weitere, hier nicht dargestellte, Ausführungsvariante sieht einen vereinfachten Pedalbock 1 vor, bei welchem die Druckleitung 5 nicht integriert ist. In diesem Fall kann die hydraulische Kopplung zwischen dem Geberzylinder 3 und der Stelleinrichtung 4 beispielsweise durch eine flexible Druckleitung 5 realisiert werden. Dabei ist an dem Geberzylinder 3 beispielsweise ein Konnektor oder ein Doppelanschluss vorgesehen, über welchen die hydraulische Verbindung mit der Stellvorrichtung 4 (bzw. mit einem nicht dargestellten Nehmerzylinder) herstellbar ist. Das Druckventil 6 zum Absperren/Öffnen der Druckleitung 5 kann dabei ähnlich wie oben im Pedalbock 1 integriert sein.

Die an sich bekannte Wirkungsweise der Betätigungseinrichtung ist folgende:
Bei Betätigung der Pedalplatte 2.1 wird der Pedalhebel 2 um die Drehachse A verschwenkt. Dadurch wird die an dem Pedalhebel 2 angelenkte Kolbenstange 3.1 und somit der Kolben innerhalb des Geberzylinders 3 verschoben, wodurch der Druck in dessen Druckraum ansteigt. Übersteigt die Pedalkraft bei der Betätigung der an dem Pedalhebel 2 befindlichen Pedalplatte 2.1 einen bestimmten Wert, wird durch die Kopplung des Geberzylinders 3 mit der Stellvorrichtung 4 über die Druckleitung 5 der Druck in dem Druckraum des Stellzylinders der Stellvorrichtung 4 entsprechend größer, wodurch eine Verschiebung der Kolbenstange 4.1 hervorgerufen wird, die wiederum eine Nachstellung/Veränderung der Vorspannung der Übertotpunktfeder zur Folge hat und somit zu einer Nachstellung bzw. Kompensation der Pedalkraft führt.

Die erfindungsgemäße Anordnung des modular aufgebauten Pedalbocks 1 ermöglicht die Integration der mit dem Geberzylinder 3 hydraulisch verbundenen Stellvorrichtung 4 zur toleranzabhängigen Nachstellung der Pedalkraft in dem Pedalbock 1. Dabei sind sowohl der Pedalbock 1 als auch der Pedalhebel 2 bzw. das Gesamtsystem vornehmlich aus Kunststoff hergestellt. Um die Integration zu ermöglichen, sind entsprechende Anbindungspunkte für den adaptiven Energiespeicher E/die Stellvorrichtung 4 an Pedalhebel 2 und Pedalbock 1 angebracht. Außerdem sind Geometrien vorgesehen, die der Anordnung/Unterbringung der Druckleitung 5 dienen. Ferner sind Geometrien, wie in der Art des Druckventils 6, angeordnet, mit dessen Hilfe eine Zu- oder Abschaltung des Volumenstroms oder zumindest eine Drosselung erzielbar ist. Die erfindungsgemäße Anordnung kann als zusätzliche Option beispielsweise bei allen Kupplungspedalen von Kraftfahrzeugen anstelle eines einfachen Kraftkompensationsmechanismus, wie einer Übertotpunktfeder, verwendet werden kann.

### Bezugszeichenliste

- 1: Pedalbock
- 1.1: Seitenwange
- 1.2: Seitenwange
- 2: Pedalhebel
- 2.1: Pedalplatte
- 3: Geberzylinder
- 3.1: Kolbenstange
- 4: Stellvorrichtung
- 4.1: Kolbenstange
- 5: Druckleitung
- 6: Druckventil
- A: Drehachse
- B: Drehpunkt
- E: Energiespeicher
- P1: Anbindungspunkt

## Patentansprüche

1. Anordnung einer hydraulischen Betätigungseinrichtung, insbesondere für Kupplungs-oder Bremssysteme von Kraftfahrzeugen, mit einem an einem Pedalbock (1) verschwenkbar um eine Drehachse (A) gelagerten Pedalhebel (2), welcher zur Erzeugung eines hydraulischen Betätigungsdrucks mit einem Geberzylinder (3) wirkverbunden ist, wobei ein in der Art einer Übertotpunktfeder ausgebildeter Energiespeicher (E) und eine mit dem Geberzylinder (3) gekoppelte hydraulische Stellvorrichtung (4) vorgesehen sind, dadurch genkennzeichnet, dass mittels der bei einer Überschreitung eines vorbestimmten Wertes der auf den Pedalhebel (2) aufgebrachten Betätigungskraft und damit einer Überschreitung eines vorbestimmten Wertes des im hydraulischen Systems vorhandenen Drucks durch eine Kopplung des Geberzylinders (3) mit der Stellvorrichtung (4) über eine Druckleitung (5) der Druck in einem Druckraum eines Stellzylinders der Stellvorrichtung (4) entsprechend größer wird, wodurch eine Verschiebung einer Kolbenstange (4.1) hervorgerufen wird, die eine selbsttätige Nachstellung des Energiespeichers (E) zur Folge hat, wobei der Energiespeicher (E) in die Stellvorrichtung (4) integriert ist.

2. Anordnung nach Anspruch 1, **dadurch gekennzeichnet, dass** die Stellvorrichtung (4) und der Geberzylinder (3) in den Pedalbock (1) integriert sind.

3. Anordnung nach Anspruch 1 oder 2, **dadurch gekennzeichnet, dass** die hydraulische Stellvorrichtung (4) einerseits um einen an dem Pedalbock (1) angeordneten Drehpunkt (B) und andererseits um einen an dem Pedalhebel (2) befindlichen Anbindungspunkt (P1) schwenkbar gelagert ist.

4. Anordnung nach Anspruch 3, **dadurch gekennzeichnet, dass** eine Kolbenstange (4.1) der Stellvorrichtung (4) um den Drehpunkt (B) an dem Pedalbock (1) schwenkbar gelagert ist.

5. Anordnung nach Anspruch 3 oder 4 **dadurch gekennzeichnet, dass** in dem Anbindungspunkt (P1) an dem Pedalhebel (2) der als Übertotpunktfeder ausgebildete und in die Stellvorrichtung (4) integrierte Energiespeicher (E) angelenkt ist.

6. Anordnung nach einem der Ansprüche 1 bis 5, **dadurch gekennzeichnet, dass** der Geberzylinder (3) und die Stellvorrichtung (4) über eine in den Pedalbock (1) integrierte Druckleitung (5) miteinander gekoppelt sind.

7. Anordnung nach einem der Ansprüche 1 bis 6, **dadurch gekennzeichnet, dass** Mittel (6) für eine Zu- oder Abschaltung der hydraulischen Verbindung zwischen dem Geberzylinder (3) und der Stelleinrichtung (4) vorgesehen sind.

8. Anordnung nach Anspruch 7, **dadurch gekennzeichnet, dass** die der Zu- oder Abschaltung der hydraulischen Verbindung dienenden Mittel (6) in dem Pedalbock (1) integriert sind und dass die Mittel (6) von einem Druckventil gebildet sind.

9. Anordnung nach einem der Ansprüche 5 bis 8, **dadurch gekennzeichnet, dass** die Druckleitung (5) aus einem festen Kunststoff besteht.

10. Anordnung nach einem der Ansprüche 5 bis 8, **dadurch gekennzeichnet, dass** die hydraulische Verbindung von Stellvorrichtung (4) und Geberzylinder (3) von einer flexiblen Druckleitung (5) gebildet ist, die mittels Konnektoren/Anschlüssen am Geberzylinder (3) befestigt ist.

## Claims

1. Arrangement of a hydraulic actuating device, in particular for clutch or brake systems of motor vehicles, having a pedal lever (2) which is mounted on a pedal block (1) such that it can be pivoted about a rotational axis (A), which pedal lever (2) is operatively connected to a master cylinder (3) in order to produce a hydraulic actuating pressure, an energy store (E), which is configured in the manner of an over-dead-centre spring, and a hydraulic actuating apparatus (4) which is coupled to the master cylinder (3) being provided, **characterized in that**, by means of which, the pressure in a pressure space of an actuating cylinder of the actuating apparatus (4) becomes correspondingly greater if a predefined value of the actuating force which is applied to the pedal lever (2) is exceeded and therefore a predefined value of the pressure which is present in the hydraulic system is exceeded by way of coupling of the master cylinder (3) to the actuating apparatus (4) via a pressure line (5), as a result of which a displacement of a piston rod (4.1) is brought about which results in an automatic adjustment of the energy store (E), the energy store (E) being integrated into the actuating apparatus (4).

2. Arrangement according to Claim 1, **characterized in that** the actuating apparatus (4) and the master cylinder (3) are integrated into the pedal block (1).

3. Arrangement according to Claim 1 or 2, **characterized in that** the hydraulic actuating apparatus (4) is mounted such that it can be pivoted firstly about a pivot point (B) which is arranged on the pedal block (1) and secondly about an attachment point (P1) which is situated on the pedal lever (2).

4. Arrangement according to Claim 3, **characterized in that** a piston rod (4.1) of the actuating apparatus (4) is mounted such that it can be pivoted about the pivot point (B) on the pedal block (1).

5. Arrangement according to Claim 3 or 4, **characterized in that** the energy store (3) which is configured as an over-dead-centre spring and is integrated into the actuating apparatus (4) is articulated at the attachment point (P1) on the pedal lever (2).

6. Arrangement according to one of Claims 1 to 5, **characterized in that** the master cylinder (3) and the actuating apparatus (4) are coupled to one another via a pressure line (5) which is integrated into the pedal block (1).

7. Arrangement according to one of Claims 1 to 6, **characterized in that** means (6) are provided for switching the hydraulic connection between the master cylinder (3) and the actuating device (4) on or off.

8. Arrangement according to Claim 7, **characterized in that** the means (6) which serve to switch the hydraulic connection on or off are integrated into the pedal block (1), and **in that** the means (6) are formed by a pressure valve.

9. Arrangement according to one of Claims 5 to 8, **characterized in that** the pressure line (5) consists of a solid plastic.

10. Arrangement according to one of Claims 5 to 8, **characterized in that** the hydraulic connection of the actuating apparatus (4) and the master cylinder (3) is formed by a flexible pressure line (5) which is fastened to the master cylinder (3) by means of connectors/connections.

## Revendications

1. Agencement d'un dispositif d'actionnement hydraulique, notamment pour systèmes d'embrayage ou de freinage de véhicules automobiles, avec un levier de pédale (2) disposé de façon à pouvoir pivoter autour d'un axe de rotation (A) au niveau d'un support de pédale (1), ledit levier étant relié de façon active à un maître-cylindre (3) pour produire une pression d'actionnement hydraulique, un accumulateur d'énergie (E) réalisé à la façon d'un ressort à point mort haut et un dispositif de réglage hydraulique (4) couplé au maître-cylindre (3) étant prévus, **caractérisé en ce qu'**à l'aide de la force d'actionnement appliquée sur le levier de pédale (2) en cas de dépassement d'une valeur prédéterminée et ainsi d'un dépassement d'une valeur prédéterminée de la pression régnant dans le système hydraulique, la pression présente dans une chambre de pression d'un cylindre de réglage du dispositif de réglage (4) est augmentée de façon correspondante par un couplage du maître-cylindre (3) avec le dispositif de réglage (4) via une conduite de pression (5), provoquant un coulissement d'une tige de piston (4.1) ayant pour conséquence un réajustement automatique de l'accumulateur d'énergie (E), l'accumulateur d'énergie (E) étant intégré dans le dispositif de réglage (4).

2. Agencement selon la revendication 1, **caractérisé en ce que** le dispositif de réglage (4) et le maître-cylindre (3) sont intégrés dans le support de pédale (1).

3. Agencement selon la revendication 1 ou 2, **caractérisé en ce que** le dispositif de réglage hydraulique (4) est disposé de façon à pouvoir pivoter d'une part autour d'un point de rotation (B) disposé au niveau du support de pédale (1) et d'autre part autour d'un point de jonction (P1) se trouvant au niveau du levier de pédale (2).

4. Agencement selon la revendication 3, **caractérisé en ce qu'**une tige de piston (4.1) du dispositif de réglage (4) est disposée de façon à pouvoir pivoter autour du point de rotation (B) au niveau du support de pédale (1).

5. Agencement selon la revendication 3 ou 4, **caractérisé en ce que** l'accumulateur d'énergie (E) réalisé sous la forme d'un ressort à point mort haut et intégré dans le dispositif de réglage (4) est articulé dans le point de jonction (P1) prévu au niveau du levier de pédale (2).

6. Agencement selon l'une quelconque des revendications 1 à 5, **caractérisé en ce que** le maître-cylindre (3) et le dispositif de réglage (4) sont couplés entre eux via une conduite de pression (5) intégrée dans le support de pédale (1).

7. Agencement selon l'une quelconque des revendications 1 à 6, **caractérisé en ce que** des moyens (6) sont prévus pour une connexion ou déconnexion de la liaison hydraulique entre le maître-cylindre (3) et le dispositif de réglage (4).

8. Agencement selon la revendication 7, **caractérisé en ce que** les moyens (6) servant de connexion ou déconnexion de la liaison hydraulique sont intégrés dans le support de pédale (1) et que les moyens (6) sont formés par une soupape de pression.

9. Agencement selon l'une quelconque des revendications 5 à 8, **caractérisé en ce que** la conduite de pression (5) est réalisée à partir d'une matière plastique solide.

10. Agencement selon l'une quelconque des revendications 5 à 8, **caractérisé en ce que** la liaison hydraulique est formée par le dispositif de réglage (4) et que le maître-cylindre (3) est formé par une conduite de pression (5) flexible fixée au maître-cylindre (3) à l'aide de connecteurs/bornes.
